# EUROPÄISCHE PATENTSCHRIFT

(11) **EP 2 332 946 B1**
(45) Veröffentlichungstag und Bekanntmachung des Hinweises auf die Patenterteilung: **08.07.2015**
(21) Anmeldenummer: 10190587.5
(22) Anmeldetag: 10.11.2010
(51) Int. Cl.: C07F 9/09, B29C 33/60, C08G 18/32, C08L 97/02, B29C 33/62, C08G 18/76

(54) **Trennmittel und Verwendung zur Herstellung von Kompositformkörpern**
Separating agent and use of same for producing composite moulds
Agent de séparation et utilisation pour la fabrication de corps moulés composites

(30) Priorität: 10.12.2009 DE 102009047764
(43) Veröffentlichungstag der Anmeldung: 15.06.2011
(73) Patentinhaber: Evonik Degussa GmbH, 45128 Essen (DE)
(72) Erfinder: Balbo Block, Maike Vivian, 20535, Hamburg (DE); Lüthge, Thomas, 19086, Consrade (DE); Habeck, Nadine, 23923, Schönberg (DE)

(56) Entgegenhaltungen:
- EP-A1- 0 460 858
- WO-A1-95/14764
- WO-A1-2007/039057
- WO-A1-2007/064085
- WO-A1-2008/119401
- DE-A1- 10 340 684
- DE-A1-102006 030 532
- US-A- 3 151 016
- US-A- 3 337 441
- US-A- 4 257 996
- US-A- 4 369 134
- US-A- 4 462 922
- US-A- 4 865 646
- US-B1- 6 274 150
- "Römpp - "Substituent"", 2005, Georg Thieme Verlag

## Beschreibung

Gegenstand der Erfindung ist ein Trennmittel und seine Verwendung zur Herstellung von Kompositformkörpern durch Umsetzung von gegebenenfalls modifizierten organischen Bindemitteln mit Materialien in Form von Spänen, Fasern, Matten oder Granulaten, insbesondere cellulosehaltigen Materialien wie beispielsweise Holz, Flachs oder Stroh in einem offenen oder geschlossenen Formwerkzeug, wobei das Formtrennmittel dem Anspruch 1 genügt.

Die Herstellung komprimierter, geformter als "Composites" bezeichneter Formteile aus Holzstückchen, -fasern oder - partikeln wie etwa OSB (oriented strand board) -Platten, Spanplatten, Faserplatten, wie z. B. MDF- oder HDF-Platten (mitteledichte bzw. hochdichte Faserplatten), Sperrholz aber auch Korkplatten sowie Formkörpern aus Flachs, Stroh oder anderen cellulosehaltigen Werkstoffen, mit Isocyanatbindern, gegebenenfalls in Gegenwart oder Abwesenheit von Katalysatoren, Hilfsmitteln und/oder Zusatzstoffen in einem offenen oder geschlossenen Formwerkzeug ist bekannt aus zahlreichen Patent- und Literaturveröffentlichungen (WO 98/00464, US 5,008,359, US 5,140,086, US 5,204,176, US 3,440,189).

Bei diesen Prozessen sind Temperaturen abhängig vom Bindemittel von 20 bis 450 °C nötig, um die Reaktion der Binder zu gewährleisten und eine Verformung der Werkstoffe zu der gewünschten Endform wie beispielsweise Bretter oder Platten zu ermöglichen. Dabei werden Drücke von 0 bis 100 bar erreicht.

Der Massenanteil der Bindemittel am Gesamtgewicht der Formkörper, beträgt abhängig von der Art des verwendeten Bindemittels und der Art des Komposits von 1 bis 80 Gew.-%, vorzugsweise 5 bis 40 Gew.-% und insbesondere weniger als 20 Gew.-%.

Verwendete Bindemittel sind alle Arten polyfunktionalisierter Isocyanate, typischerweise aromatische Polyisocyanate. Das am weitesten verbreitete aromatische Polyisocyanat ist polymeres Diphenylmethandiisocyanat (PMDI). Neben den Isocyanaten werden verschiedene Formaldehyd-Harze als Bindemittel für Kompositformkörper verwendet. Zu den gängigsten gehören Harnstoff/Formaldehyd-, Phenol/Formaldehyd- oder Melamin/Formaldehyd-Harze und Mischungen aus diesen. In geringen Mengen werden auch Bindemittel aus nachwachsenden Rohstoffen wie Tanninen, Ligninen oder Proteinen verwendet. Des Weiteren kommen Gießharze wie beispielsweise Epoxid-, Polyester-, Polyurethan- oder Polylactidharze zum Einsatz.

Obgleich die Herstellung von kompakten Cellulose/Isocyanat-Formkörpern eine große technische Bedeutung erlangt hat, weisen die beschriebenen Verfahren, z.B. wegen der hervorragenden Adhäsion von Polyurethanen zu anderen Werkstoffen, auch technische Mängel auf. Nachteilig ist insbesondere, dass die Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte, metallische Formwerkzeuge verwendet und/oder Trennmittel eingesetzt.

Diese Formtrennmittel werden entweder in die härtbare Cellulose-Isocyanatmischung als interne Trennmittel eingesetzt oder die Formwerkzeuginnenflächen werden vor der Herstellung der Formkörper mit einem gleichmäßigen Überzug aus äußeren Trennmitteln versehen, wofür verschiedene spritz- und sprühtechnische sowie Walzenauftragsverfahren (DE-10 337 594) aus dem Stand der Technik bekannt sind. Es besteht auch die Möglichkeit, die Oberfläche der zu verpressenden Teilchen mit Formtrennmittel zu beschichten. Dies erfolgt ebenfalls durch Sprühauftrag.

Als konventionelle interne oder externe Trennmittel werden beispielsweise Fettsäuren und deren Metallsalze (WO-A-03/072324, WO-A-02/36268), polymere Fettsäuren (EP-A-0 269 869), carboxyfunktionalisierte Siloxane (EP-B-0 129 430), Wachse (EP-B-0 046 014), speziell Esterwachs (EP-B-0 057 502), oxidiertes Wachs (WO-A-00/53381) oder Polyolefinwachs (WO-A-98/00464), Polyolefinwachs in Kombination mit Fettsäuren (WO-A-01/58998) oder schließlich Fettsäuren oder Wachssäuren in Kombination mit Polysiloxanen verwendet, die mit einer organisch gebundenen aktiven Wasserstoffgruppe modifiziert sind und in der Lage sind, mit Isocyanat zu reagieren (WO-A-03/008164).

Solche konventionellen Trennmittel zeigen den Nachteil, dass die fertigen Formkörper an der Oberfläche dunkle Verfärbungen zeigen, die die optische Wertigkeit stark beeinträchtigen. Weiterhin zeigen die Pressformen häufig schwarze Aufbaurückstände.

Diese Aufbaurückstände können sich auch wieder auf den hergestellten Formkörper ablagern und auch auf diese Weise zu dunklen Verfärbungen und/oder Unregelmäßigkeiten in deren Oberflächenstruktur führen oder, insbesondere bei siliconhaltigen Trennmitteln, zu erheblichen Lackierproblemen führen. Teilweise ist dadurch eine Nachbehandlung wie etwa Abschleifen der Oberfläche nötig.

Als thermisch stabilen Trennwirkstoff bei der Herstellung cellulose-isocyanathaltiger Formteile beschreibt DE 19601401 Talkum. Dieser anorganische Feststoff ist jedoch bei Presstemperatur fest und führt dadurch ebenfalls zu erheblichem Aufbau auf den Pressformen.

EP 1 719 597 beschreibt die Verwendung von Aminopropylgruppen enthaltenden Siloxanverbindungen als Formtrennmittel zur Vermeidung schwarzer Aufbaurückstände.

GB 1148016 beschreibt als Trennwirkstoffe organische Substanzen, die freien Hydroxylgruppen enthalten also Polyole wie Glycerin, Ethylenglykol, Polyester oder Polyether. Diese Substanzen reagieren jedoch aufgrund ihrer Hydroxylgruppen mit dem als Bindemittel verwendeten Isocyanaten ab und können alleine nicht als trennaktive Substanz wirken.

DE 2932175, US 4257995 und DE 3108537 beschreiben Trennmittel, die Phosphatsäureester als trennwirksame Substanzen, insbesondere als interne Trennmittel, enthalten, in der Anwendung bei der Herstellung (ligno)cellulosehaltiger Produkte.

US 4 257 996 A, US 3 151 016 A, EP 0 460 858 A1 offenbaren auch Trennmittelszusammensetzungen.

Im Zuge immer stärkerer Optimierung bei der Produktion von Kompositformkörpern gibt es jedoch weiterhin Bedarf bezüglich der Erhöhung der Verarbeitungsgeschwindigkeiten und Erniedrigung der Verarbeitungstemperaturen.

Eine Aufgabe der vorliegenden Erfindung war es daher, ein Trennmittel bereitzustellen, welches einen oder mehrere Nachteile der Trennmittel des Stands der Technik vermeidet und welches vorzugsweise eine Erhöhung der Verarbeitungsgeschwindigkeiten und/oder eine Erniedrigung der Verarbeitungstemperaturen ermöglicht.

Überraschenderweise wurde nun gefunden, dass durch Zusatz von mindestens zwei Hydroxyl-Gruppen aufweisenden Verbindungen mit einem Molekulargewicht von kleiner 250 g/mol, wie z. B. Monoethylenglykol oder Glyzerin, zu Phosphaten, wie sie teilweise z. B. in DE 2932175, US4257995 und DE 3108537 als trennwirksame Substanzen beschrieben werden, die Aufgabe der Erfindung gelöst wird.

Gegenstand der vorliegenden Erfindung sind deshalb Trennmittelzusammensetzungen, deren Verwendung in dem erfindungsgemäßen Verfahren zur Herstellung von Kompositformkörpern, die mit dem erfindungsgemäßen Verfahren erhältlichen Kompositformkörper selbst sowie deren Verwendung wie in den Ansprüchen beansprucht und in der Beschreibung detailliert beschrieben.

Das erfindungsgemäße Trennmittel hat den Vorteil, dass durch seinen Einsatz die Verarbeitungsgeschwindigkeit, insbesondere bei kontinuierlichen Herstellverfahren deutlich erhöht werden kann.

Das erfindungsgemäße Trennmittel hat außerdem den Vorteil, dass seine Verwendung niedrigere Verarbeitungstemperaturen ermöglicht. Neben einer Energieeinsparung führt dies außerdem dazu, dass z. B. bei niedrigeren Temperaturen hergestellte Holz(span)platten in helleren Farbtönen produziert werden können.

Selbst bei höheren Verarbeitungstemperaturen haben die erfindungsgemäßen Trennmittelzusammensetzungen den Vorteil, dass es nicht oder nur in geringem Maße zu Verfärbungen und/oder Dunkelfärbungen der Oberflächen der herstellten Kompositformkörper kommt.

Die erfindungsgemäßen Trennmittelzusammensetzungen, deren Verwendung in Verfahren zur Herstellung von Kompositformkörpern, die Kompositformkörper selbst sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn nicht anders angegeben sind bei Angaben in Prozent immer Massen-% gemeint. Sind nachfolgend Mittelwerte angegeben, so sind diese, wenn nicht anders angegeben, die zahlengemittelten Mittelwerte.

Die erfindungsgemäßen Trennmittelzusammensetzungen zeichnen sich dadurch aus, dass sie den Erfordernissen des Anspruchs 1 genügen.

Es kann vorteilhaft sein, wenn das Massenverhältnis der Komponente a) zur Komponente b) von 20 zu 80 bis 80 zu 20, bevorzugt von 40 zu 60 bis 60 zu 40 und besonders bevorzugt ca. 50 zu 50 beträgt.

Als Komponente b) enthält die erfindungsgemäße Zusammensetzung vorzugsweise ein oder mehrere Diole, Triole und/oder mehrwertige Polyole, bevorzugt eine oder mehrere Verbindungen ausgewählt aus der Gruppe umfassend Monoethylenglykol, Diethylenglykol, Triethylenglykol, Tetraethylenglykol, Propylenglykol, Butylenglykol, Glyzerin, Trimethylolpropan und Pentaerythrit. Besonders bevorzugt besteht die Komponente b) der erfindungsgemäßen Zusammensetzung aus einer oder mehrere Verbindungen ausgewählt aus der Gruppe umfassend Monoethylenglykol, Diethylenglykol, Triethylenglykol, Tetraethylenglykol, Propylenglykol, Butylenglykol, Glyzerin, Trimethylolpropan und Pentaerythrit.

Handelt es sich bei den Resten R¹ bis R⁶ um organische Reste, so können diese gleich oder verschieden sein. Vorzugsweise sind die organischen Reste R¹ bis R⁶ ausgewählt aus, verzweigten oder unverzweigten, acyclischen oder cyclischen, alicyclischen oder heterocyclischen, aliphatischen oder aromatischen oder heteroaromatischen, substituierten oder unsubstituierten, organischen Resten, bevorzugt ein linearer aliphatischer gesättigter und/oder ungesättigter Rest mit 1 bis 25, vorzugsweise 12 bis 18 Kohlenstoffen, oder Resten der Formel (III) 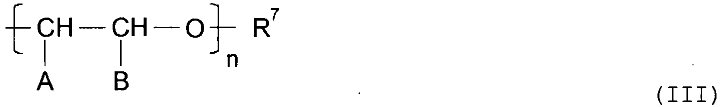 mit
R⁷ = verzweigter oder unverzweigter, acyclischer oder cyclischer, alicyclischer oder heterocyclischer, aliphatischer oder aromatischer oder heteroaromatischer, substituierter oder unsubstituierter organischer Rest, bevorzugt ein linearer aliphatischer gesättigter und/oder ungesättigter Rest mit 1 bis 25, vorzugsweise 12 bis 18 Kohlenstoffen,
A oder B gleich Wasserstoff und der jeweilige andere Rest gleich Wasserstoff oder ein substituierter oder unsubstituierter, linearer oder verzweigter Alkylrest mit 1 bis 10 Kohlenstoffatomen oder ein Arylrest, vorzugsweise ein Phenylrest, vorzugsweise ein Phenyl-, Ethyl- oder Methylrest, bevorzugt ein Methylrest, und n eine zahlengemittelte Zahl von 1 bis 100, vorzugsweise 2 bis 10 ist.

Handelt es sich bei einem oder mehreren der Reste R¹ bis R⁷ um einen cyclischen Rest, insbesondere einen alicyclischen Kohlenwasserstoffrest, so kann dieser z. B. ein Cycloalkyl- oder Cycloalkenylrest sein. Handelt es sich bei einem oder mehreren der Reste R¹ bis R⁷ um einen heterocyclische Rest, so weist dieser vorzugsweise Stickstoff, Kohlenstoff und ggf. weitere Heteroatome auf. Der heterocyclische Rest kann z. B. ein drei-, vier-, fünf-, sechs- oder höhergliedriger Ring sein, der wiederum durch H, Alkyl- oder Arylgruppen mit Akzeptorbeziehungsweise Donatorsubstituenten oder Teilen von cyclischen Systemen mit Akzeptor- beziehungsweise Donatorsubstituenten und/oder hydrophilen beziehungsweise hydrophoben Gruppen substituiert sein kann. Besonders bevorzugt ist der heterocyclische Rest ein Pyrrolidinyl-, Pyrrolinyl-, Piperidinyl- oder Morpholinylrest ein. Handelt es sich bei einem oder mehreren der Reste R¹ bis R⁷ um einen Arylrest, so kann dieser z. B. Phenyl-, Naphthyl- oder Anthracenylrest sein. Handelt es sich bei einem oder mehreren der Reste R¹ bis R⁷ um einen Heteroarylrest, so kann dieser vorzugsweise ein Imidazolyl-, Pyrazolyl-, Pyridinyl-, Thienyl-, Thiazolyl-, Furyl- oder Indolylrest sein. Die Reste R¹ bis R⁷ können auch solche organische Reste sein, bei denen ein oder mehrere der Reste R¹ bis R⁷ miteinander verknüpft sind.

Als Komponente a) ist mindestens ein anorganisches Phosphat, bei welchem R¹ und R² bzw. falls anwendbar (wenn X = Rest der Formel (II)) R¹ bis R⁵ keine organischen Reste sind, enthalten. Bevorzugte anorganische Phosphate sind solche, bei denen X ein Rest der Formel (II) ist und bei denen m = 1 bis 3, vorzugsweise 1 oder 2 ist und die Reste R¹ bis R⁵ gleich oder unterschiedlich H, NH₄⁺, K oder Na, vorzugsweise Na sind.

Als Komponente a) ist mindestens ein organisches Phosphat, bei welchem mindestens einer der Reste R¹ oder R² bzw. falls anwendbar (wenn X = Rest der Formel (II)) mindestens einer der Reste R¹ bis R⁵ nicht H, Metall oder NR_{z}H_{4-z}⁺, mit R und z wie oben definiert, ist, enthalten. Bevorzugte organische Phosphate sind solche der Formel (I), bei denen X = H, NH₄⁺, K oder Na, insbesondere K, und mindestens einer oder beide der Reste R¹ oder R², bevorzugt nur einer der Reste ein Alkyl- oder Alkenylrest, vorzugsweise ein Alkyl- oder Alkenylrest mit 10 bis 25, bevorzugt 12 bis 18 Kohlenstoffatomen, besonders bevorzugt ein Oleyl- oder Stearylrest ist, und der andere Rest ggf. H, NH₄⁺, K oder Na, insbesondere K ist.

Erfindungsgemäße Zusammensetzungen sind solche, die als Komponente a) mindestens ein anorganisches Phosphat, bei welchem R¹, R² und X bzw. falls anwendbar (wenn X = Rest der Formel (II)) R¹ bis R⁵ keine organischen Reste sind und mindestens ein organisches Phosphat, bei welchem mindestens einer der Reste R¹, R² oder X bzw. falls anwendbar (wenn X = Rest der Formel (II)) mindestens einer der Reste R¹ bis R⁵ nicht H, Metall oder NR_{z}H_{4-z}⁺, mit R und z wie oben definiert, ist, enthalten.

Besonders bevorzugte erfindungsgemäße Zusammensetzungen sind solche, die als Komponente a) kein Phosphat der Formel (I) aufweisen, bei dem alle Reste R¹, R² und X bzw. falls anwendbar (wenn X = Rest der Formel (II)) alle Reste R¹ bis R⁶ organischen Reste sind.

Erfindungsgemäße Zusammensetzungen sind solche, die als Komponente a) ein Alkali Mono- und/oder Di-Alkenylphosphat, z. B. Kalium-Mono-/Di-Oleylphosphat enthalten.

Es kann vorteilhaft sein, wenn die erfindungsgemäße Zusammensetzung als Komponente c) ein Alkalihydroxid aufweist. Vorzugsweise enthält die Zusammensetzung als Komponente c) ein Alkalihydroxid ausgewählt aus NaOH und KOH, bevorzugt in Form einer wässrigen Lösung.

Die erfindungsgemäße Trennmittelzusammensetzung weist vorzugsweise einen pH-Wert, gemessen mittels pH-Teststreifen (welche für den pH-Wertbereich von 7,5 bis 9,5 z. B. von der Firma Marcherey-Nagel als pH-Fix 7.5-9.5 angeboten werden) von größer-gleich 7 bis 14, bevorzugt 7 bis 10 und besonders bevorzugt 8 bis 9 auf. Der pH-Wert der erfindungsgemäßen Zusammensetzung kann durch Zugabe von Alkalihydroxid(-Lösung), organische Säuren, wie z. B. Essigsäure und/oder Mineralsäuren, vorzugsweise Phosphorsäure eingestellt werden.

Die Komponenten a) und b) können in reiner Form als Trennmittel eingesetzt werden. Da sie aber bereits in geringen Konzentrationen hervorragende Trennergebnisse zeigen, weist die Trennmittelzusammensetzung erfindungsgemäß auch ein Lösemittel auf. Die erfindungsgemäße Trennmittelzusammensetzung weist deshalb als Komponente d) Wasser auf. Bevorzugte Trennmittelzusammensetzungen weisen einen Anteil an Wasser von 80 bis 98 Gew.-% und besonders bevorzugt von 85 bis 97 Gew.-% auf.

Organische Lösungsmittel sind weniger bevorzugt, da sie niedrige Zündpunkte zeigen und sich im Bereich der Anwendungstemperaturen entzünden können. Besser geeignet sind cyclische oder lineare Siloxane, wobei nur solche Siloxane in Frage kommen, deren Zündpunkt oberhalb der verwendeten Anwendungstemperaturen liegen.

Zur Vermeidung von großen Transportvolumina kann es vorteilhaft sein, die erfindungsgemäße Trennmittelzusammensetzung ohne oder nur mit geringen Mengen an Lösemittel zu lagern und zu transportieren und erst kurz vor oder bei der Verwendung durch Zugabe von Lösemittel auf die genannten bevorzugten Lösemittelkonzentrationen zu verdünnen.

Als Komponente e) kann die erfindungsgemäße Zusammensetzung weitere übliche Hilfs- und Zusatzstoffe aufweisen. Als Hilf- bzw. Zusatzstoffe können in der erfindungsgemäßen Zusammensetzung insbesondere enthalten sein:
A)Emulgatoren:
   Anionische Emulgatoren wie Alkylethercarboxylate, Alkylsulfate, Fettalkoholethoxylatethersulfate, alpha-Ölefinsulfonate, Alkylphosphate, Alkylpolyetherphosphate, Alkylsulfosuccinate; nichtionische Emulgatoren wie Fettalkohole, ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside oder Kombinationen der Emulgatoren. Der Anteil an Emulgatoren an der gesamten Erfindungsgemäßen Zusammensetzung beträgt vorzugsweise von 0,1 bis 10 Gew.-%, bevorzugt 0,5 bis 6 Gew.-%.
B) Katalysatoren
   Als Katalysatoren können solche verwendet werden, die typischerweise für die Reaktion des Bindemittels verwendet werden. Für die Polyurethanreaktion geeignete Katalysatoren können z. B. Lewis-Säuren wie beispielsweise Zinnverbindungen oder Lewis-Basen wie beispielsweise tertiäre Amine sein. Zur Katalyse bei als Bindemittel eingesetzten Formaldehydharzen können z. B. Ammoniumsalze wie z. B. Ammoniumsulfat oder Peroxide verwendet werden.
C) Viskositätsmodifizierer
   Als Viskositätsmodifizierer können z. B. typische Verdicker wie als Carbomere bezeichnete Polyacrylsäurederivate oder andere Polyelektrolytverdicker wie wasserlösliche Cellulosen oder Xanthangum in der erfindungsgemäßen Zusammensetzung enthalten sein.
D) Konservierungsmittel, Bakterizide und/oder Fungizide.
E) Handelsübliche Antioxidantien und Entschäumer.
F)Antistatika
   Handelsübliche Zusätze zur Beeinflussung der Leitfähigkeit, wie antistatisch wirkende Zusätze oder die Leitfähigkeit erhöhende Zusätze.

Die erfindungsgemäße Zusammensetzung kann als Emulsion und/oder Dispersion und/oder Lösung vorliegen.

Zur Herstellung einer erfindungsgemäßen Zusammensetzung kann jede dafür geeignete, bekannte Methode verwendet werden.

Die erfindungsgemäßen Trennmittelzusammensetzungen können in allen Verfahren, bei denen Trennmittel eingesetzt werden, verwendet werden. Vorzugsweise wird die erfindungsgemäße Trennmittelzusammensetzung in dem nachfolgend beschriebenen erfindungsgemäßen Verfahren eingesetzt.

Das erfindungsgemäße Verfahren zur Herstellung eines Kompositformkörpers durch kontinuierliches oder diskontinuierliches Verpressen einer Masse enthaltend mindestens ein organisches Bindemittel und mindestens ein Material, welches in Form von Spänen, Fasern, Matten, Pulvern oder Granulaten vorliegt, zeichnet sich dadurch aus, dass das Pressen in Gegenwart einer erfindungsgemäßen Trennmittelzusammensetzung erfolgt, wie in Anspruch 6 angegeben.

Das erfindungsgemäße Verfahren wird vorzugsweise so durchgeführt, dass das Presswerkzeug während des Pressvorgangs eine Temperatur abhängig vom Bindemittel von 20 bis 450 °C aufweist. Bei Isocyanten/Polyisocyanaten und Formaldehydharzen werden vorzugsweise Temperaturen von 90 bis 350 °C, bevorzugt von 180 bis 275 °C eingesetzt während beim Einsatz von Epoxidharzen als Binder vorzugsweise Temperaturen von 20 bis 150°C eingesetzt werden.

Die erfindungsgemäße Trennmittelzusammensetzung kann dabei als internes Trennmittel (Einarbeitung der Trennmittelzusammensetzung in die zu verpressende Masse) oder als externes Trennmittel (Aufbringen der Trennmittelzusammensetzung auf die zu verpressende Masse oder auf die Form) eingesetzt werden. Vorzugsweise wird die erfindungsgemäße Trennmittelzusammensetzung als externes Trennmittel eingesetzt.

Wird die Trennmittelzusammensetzung als externes Trennmittel eingesetzt, wird diese vorzugsweise mit einer gängigen Auftragungsmethode, z. B. durch Sprühen oder Walzenauftragung auf die zu pressende Masse oder die Pressform bzw. das Pressblech aufgetragen.

Wird das erfindungsgemäße Verfahren kontinuierlich durchgeführt, so erfolgt die Formgebung vorzugsweise durch Pressbleche und/oder Presswalzen. Die Geschwindigkeit, mit welcher die zu pressende Masse bewegt wird, beträgt vorzugsweise von 0,5 bis 500 m/min, bevorzugt von 10 bis 100 m/min und besonders bevorzugt von 15 bis 50 m/min.

Als organisches Bindemittel werden in dem erfindungsgemäßen Verfahren vorzugsweise Isocyanate, Polyisocyanate, Harnstoff/Formaldehyd-, Phenol/Formaldeyd, Melamin/Formaldehyd, Epoxid (EP), Polyurethan-, Polyester- und/oder Polylactidharze verwendet. Besonders bevorzugt werden als Bindemittel Polyisocyanate , insbesondere Diphenylmethandiisocyanat (MDI) oder polymeres Diphenylmethandiisocyanat (PMDI), eingesetzt.

Als Material zur Herstellung der zu verpressenden Masse wird vorzugsweise ein cellulosehaltiges, bevorzugt lignocellulosehaltiges oder ein aus Cellulose, bevorzugt Lignocellulose bestehendes Material eingesetzt.

Das erfindungsgemäße Verfahren kann wie im Stand der Technik beschrieben durchgeführt werden. Dabei wird üblicherweise das Lignocellulosematerial in Faser- oder Partikelform vorgelegt, dann mit Binder unter Erhalt einer Masse versetzt und dann in einer Metallpresse oder durch Anlegen eines Unterdrucks/ Vakuum geformt. Die beschriebenen Trennmittel werden vor dem Pressvorgang entweder auf die Späne bzw. die Masse oder auf die, unter Umständen bereits heißen, Metallplatten, Metallwalzen oder Formen aufgesprüht wie etwa in WO-A-02/36268 beschrieben. Schließlich wird das gepresste Material von der formgebenden Form entformt.

Durch das erfindungsgemäße Verfahren sind die erfindungsgemäßen Kompositformkörper erhältlich. Diese können z. B. die Form einer Platte, eines Blocks, eines Balken oder eines gegebenenfalls profilierten Strangs aufweisen. Selbstverständlich können durch Verwendung entsprechender Formen jegliche mögliche Formen erzielt werden. Bevorzugte Kompositformkörper sind z. B. OSB (oriented strand board) - Platten, Spanplatten, Faserplatten, wie z. B. MDF- oder HDF-Platten (mitteledichte bzw. hochdichte Faserplatten), Sperrholz aber auch Korkplatten sowie Formkörpern aus Flachs, Stroh oder anderen cellulosehaltigen Werkstoffen.

Die erfindungsgemäßen Kompositformkörper können zur Herstellung von Möbeln oder Möbelteilen oder von Verpackungsmaterialien oder als Material im Hausbau und Innenausbau verwendet werden.

Die nachfolgenden Beispiele sollen den Gegenstand der vorliegenden Erfindung näher beschreiben, ohne dass die Erfindung auf diese Ausführungsformen beschränkt sein soll.

### Beispiele:

Liste der eingesetzten Substanzen:
ILCOPhos 208 = Mono-/Di-Oleylphosphat
Polypray^{®} STPP = Natrium Tripolyphosphat, Hersteller Prayon
Glyzerin = Glyzerin reinst, 87%ig
Hostaphat^{®} MDAH = Mono-/Di-(2-Ethylhexyl)phosphat, Hersteller Clariant
Emulsogen^{®} PN Extra = Mischung aus Fettalkoholpolyglykolethern, Hersteller Clariant
Licowachs® KPE = emulgatorhaltiger Montanesterwachs, Hersteller Clariant

### Beispiel 1: Herstellung der Trennmittelemulsionen:

### Beispiel 1a: Erfindungsgemäßes Trennmittel

12g Hostaphat® MDAH werden mit 5,4 g einer 50 gew.-%igen, wässrigen Kaliumhydroxid-Lösung und 32,6g Wasser zu einer Dispersion verrührt. Anschließend wird eine Lösung aus 3 g Glycerin und 3 g Polypray® STPP in 44 g Wasser in die Dispersion eingerührt.

### Beispiel 1b: Erfindungsgemäßes Trennmittel

10 g Natrium Tripolyphosphat und 10 g Glycerin (87%ig) wurden in 70 g Wasser gelöst und in eine Dispersion aus 2 g Oleylphosphat, 0,9 g einer 50 gew.-%igen, wässrigen Kaliumhydroxid-Lösung und 10 g Wasser eingerührt.

### Vergleichsbeispiel A: (klassisches wachshaltiges Trennmittel)

Als Vergleichstrennmittel A wurden 80 g Emulsogen® PN Extra mit 400 g Licowachs® KPE bei erhöhter Temperatur unter starkem Rühren mit 50 g Wasser vermischt und dann mit 5,47 g Wasser zur fertigen Emulsion verdünnt.

### Vergleichsbeispiel B

Als Vergleichstrennmittel B wurden 12g Hostaphat MDAH und 4,7 g 50 gew.-%ige, wässrige Kaliumhydroxid-Lösung unter starkem Rühren mit 50 g Wasser vermischt und dann mit 33,3 g Wasser zur fertigen Emulsion verdünnt.

### Vergleichsbeispiel C, angelehnt an GB 1148016 Seite 3 Zeile 8:

100 % Glyzerin

### Beispiel 2: Trennversuche

Die Trennmittel gemäß den Beispielen 1a und 1b sowie der Vergleichsbeispiele A, B und C wurden mittels einer Düse in Mengen von 30 g/m² auf die als Metallbänder gestalteten Metallpressen aufgetragen. Holzstückchen wurden mit rohem Diphenylmethandiisocyanat (MDI) versetzt und bei einer Temperatur von 240 °C gepresst. Die Bandgeschwindigkeit betrug 25 m/min, die Bahnbreite 2,5 m, die Plattenstärke betrug 11 mm. In einem weiteren Versuch (Lauf 2) wurde zur Optimierung der Produktionsbedingungen der Versuch bei einer Temperatur von 200 °C und einer Bandgeschwindigkeit von 30 m/min bei gleicher Plattenstärke wiederholt. Die Ergebnisse der Trennversuche sind in Tabelle 1 angegeben

**Tabelle 1: Bewertung der Trennmittelversuche:**

| Trenn-mittel | Lauf 1: Aussehen der Holzplatten-oberflächen | Lauf 2: Aussehen der Holzplatten-oberflächen |
|---|---|---|
| 1a | Gleichmäßig, gut abgebunden, hell | Gleichmäßig, gut abgebunden, hell |
| 1b | Gleichmäßig, gut abgebunden, hell | Gleichmäßig, gut abgebunden, hell |
| A | Gleichmäßig, gut abgebunden, generell dunkler, dunkle Flecken | Teilweise abgespaltene Holzstückchen, generell dunkler, dunkle Flecken |
| B | Gleichmäßig, gut abgebunden, hell | Teilweise Anhaftung am Blech, hell |
| C | Trennmittel nicht ver-wendbar, keine Trennwirkung | Trennmittel nicht ver-wendbar, keine Trennwirkung |

Wie Tabelle 1 deutlich entnommen werden kann, weisen die Holzplatten, bei deren Herstellung die erfindungsgemäßen Trennmittel eingesetzt werden, selbst bei hohen Bandgeschwindigkeiten keine dunklen Flecken auf.

### Beispiel 3: Labortrennversuche

Es wurden die in der nachfolgenden Tabelle 2 angegebenen Trennmittelzusammensetzungen unter Laborbedingungen getestet. Dazu wurden die Trennmittelzusammensetzungen auf Prüfbleche (10x15 mm) aufgesprüht und diese zum Verpressen von mit 4 Gew.-% PMDI beleimten Spänen (Desmodur^{®} 44V20, Bayer) eingesetzt. Anschließend wurde die Kraft gemessen, welche benötigt wurde, um den entstandenen Pressling zu entformen.

Die Trenneigenschaften bei der Herstellung der Presslinge wurden mit Hilfe einer Federwaage gemessen. Die Maßeinheit betrug dabei kg. Eine Kraft von < 0,1 kg entspricht einer sehr guten Trennwirkung, eine Kraft von 0,1 bis 0,5 kg einer guten Trennwirkung und eine Kraft von 0,5 bis 1 kg war befriedigend. Die Benotung ist in Tabelle 2 angegeben.

Als Alkohol wurde in den Versuchen 3.1 bis 3.5 Glyzerin eingesetzt. In Versuch 3.6, welches als Vergleichsbeispiel dient, wurde ein Ethylenoxid/Propylenoxid Copolymer, erhältlich unter dem Handelsnamen Polyglycole P41 3000 bei der Firma Clariant als Alkohol eingesetzt.

Als Polyphosphat wurde in den Versuchen 3.1 bis 3.6 Natrium Tripolyphosphat eingesetzt.
Als KOH wurde eine 50 gew.-%ige, wässrige Kaliumhydroxid-Lösung eingesetzt.

Als Phosphatester wurde in den Versuchen 3.1 und 3.2 Ilcophos 208 eingesetzt. In Versuch 3.4 wurde Hostaphat MDAH und in Versuch 3.5 Walliphos SPP K, welches neben Kalium Monooleylphosphat zu 30 % auch Kalium Monocetylphosphat, also noch einen weiteren Ester enthält, eingesetzt.

**Tabelle 2: Laborversuche**

| Beispiel | 3.1 | 3.2 | 3.3* | 3.4* | 3.5 | 3.6* |
|---|---|---|---|---|---|---|
| Alkohol | 10g | 3g | 10g | 4,8g | 3g | 10g |
| Polyphosphat | 10g | 3g | 10g | 4,8g | 3g | 5g |
| Phosphatester | 2g | 12g | - | 0,4g | 13,5g | - |
| KOH | 0,5g | 5,4g | - | 0,5g | - | - |
| Wasser | 77,5g | 76,6 | 80g | 39,5g | 80,5g | 85g |
| Trenneigenschaft | Sehr gut | Sehr gut | gut | Befriedigend plus | sehr gut | Befriedigend minus |

| | | | | | | |
|---|---|---|---|---|---|---|
| * nicht erfindungsgemäß | | | | | | |

Den Beispielen 3.1 bis 3.6 ist zu entnehmen, dass mit den erfindungsgemäßen Trennmittelzusammensetzungen gute Ergebnisse erzielt werden können und diese besser sind als die des Vergleichsversuchs. Es ist außerdem zu erkennen, dass solche Trennmittelzusammensetzungen besonders gute Trenneigenschaften aufweisen, die sowohl ein Polyphosphat (anorganisches Phosphat) als auch einen Phosphatester (organisches Phosphat) aufweisen.

## Patentansprüche

1. Trennmittelzusammensetzung **dadurch gekennzeichnet, dass** sie die Komponenten
a) mindestens ein Phosphat der allgemeinen Formel (I) 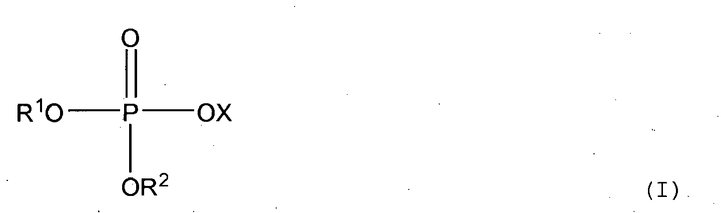 mit
X = R⁶, H, Metall, NR_{z}H_{4-z}⁺ ,mit z = 0 bis 4, und R = Kohlenwasserstoffrest mit 1 bis 10 Kohlenstoffatomen oder ein Rest der Formel (II) 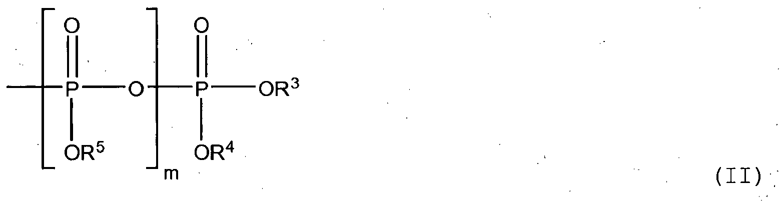 mit
m = 0 bis 5, und
R¹ bis R⁶ unabhängig voneinander Wasserstoff, ein Metall, vorzugsweise ein Alkali- oder Erdalkalimetall, wie zum Beispiel Natrium oder Kalium, oder NR_{z}H_{4-z}⁺ mit z und R wie oben beschrieben, oder dass einer oder alle der Reste R1 bis R6 gleiche oder verschiedene organische Reste, ausgewählt aus verzweigten oder unverzweigten, acyclischen oder cyclischen, alicyclischen oder heterocyclischen, aliphatischen oder aromatischen oder heteroaromatischen, substituierten oder unsubstituierten, organischen Resten, oder Resten der Formel (III) 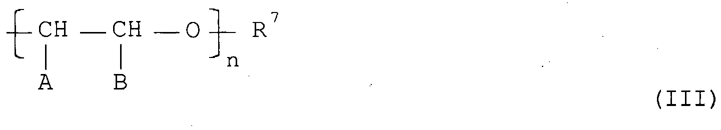 mit
R⁷ = verzweigter oder unverzweigter, acyclischer oder cyclischer, alicyclischer oder heterocyclischer, aliphatischer oder aromatischer oder heteroaromatischer, substituierter oder unsubstituierter organischer Rest,
A oder B gleich Wasserstoff und der jeweilige andere Rest gleich Wasserstoff oder ein substituierter oder unsubstituierter, linearer oder verzweigter Alkylrest mit 1 bis 10, vorzugsweise 1 oder 2 Kohlenstoffatomen, und
n eine zahlengemittelte Zahl von 1 bis 100 ist,
und
b) mindestens eine, zumindest zwei Hydroxyl-Gruppen aufweisende Verbindung mit einem Molekulargewicht von kleiner 250 g/mol enthält, wobei die Komponente b) ein oder mehrere Diole, Triole und/oder mehrwertige Polyole enthält, und wobei der Anteil der Komponente a) an der Zusammensetzung von 0,1 bis 70 Gew.-% und der Anteil der Komponente b) von 0,5 bis 90 Gew.-% beträgt und wobei die Zusammensetzung einen Anteil an Wasser von 80 bis 99 Gew.-% aufweist,
wobei als Komponente a) mindestens ein anorganisches Phosphat, bei welchem X und R¹ bis R⁵ keine organischen Reste sind und mindestens ein organisches Phosphat, bei welchem mindestens einer der Reste X und R¹ bis R⁵ nicht H, Metall oder NR_{z}H_{4-z}⁺, mit R und z wie oben definiert, ist, enthalten ist, wobei als Komponente a) ein Alkali Mono- und/oder Di-Alkenylphosphat enthalten ist.

2. Zusammensetzung nach Anspruch 1, **dadurch gekennzeichnet, dass** das Massenverhältnis der Komponente a) zur Komponente b) von 20 zu 80 bis 80 zu 20, bevorzugt von 40 zu 60 bis 60 zu 40 und besonders bevorzugt ca. 50 zu 50 beträgt.

3. Zusammensetzung nach Anspruch 1 oder 2, **dadurch gekennzeichnet, dass** Komponente b) zumindest eine Verbindung, vorzugsweise ausschließlich Verbindungen ausgewählt aus der Gruppe umfassend Monoethylenglykol, Diethylenglykol, Triethylenglykol, Tetraethylenglykol, Propylenglykol, Butylenglykol, Glyzerin, Trimethylolpropan, Pentaerythrit enthält.

4. Zusammensetzung nach zumindest einem der Ansprüche 1 bis 3, **dadurch gekennzeichnet, dass** als Komponente a) ein Alkali Mono- und/oder Di- Oleylphosphat enthalten ist.

5. Zusammensetzung nach zumindest einem der Ansprüche 1 bis 4, **dadurch gekennzeichnet, dass** als Komponente c) ein Alkalihydroxid, vorzugsweise ausgewählt aus NaOH und KOH enthalten ist.

6. Verfahren zur Herstellung eines Kompositformkörpers durch kontinuierliches oder diskontinuierliches Verpressen einer Masse enthaltend mindestens ein organisches Bindemittel und mindestens ein Material, welches in Form von Spänen, Fasern, Matten, Pulvern oder Granulaten vorliegt, **dadurch gekennzeichnet, dass** das Verpressen in Gegenwart einer Trennmittelzusammensetzung erfolgt, die die Komponenten
a) mindestens ein Phosphat der allgemeinen Formel (I) 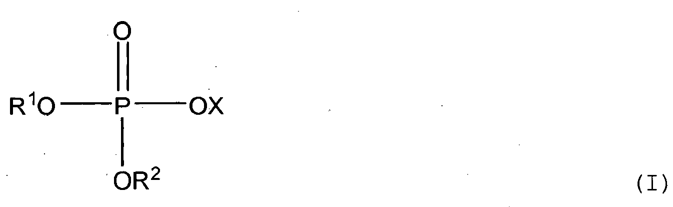 mit
X = R⁶, H, Metall, NR_{z}H_{4-z}⁺ ,mit z = 0 bis 4, und R = Kohlenwasserstoffrest mit 1 bis 10 Kohlenstoffatomen oder ein Rest der Formel (II) 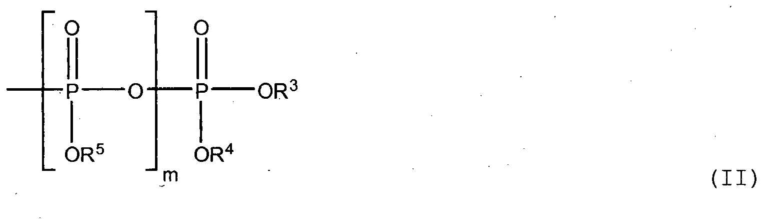 mit
m = 0 bis 5, und
R¹ bis R⁶ unabhängig voneinander Wasserstoff, ein Metall, vorzugsweise ein Alkali- oder Erdalkalimetall, wie zum Beispiel Natrium oder Kalium, oder NR_{z}H_{4-z}⁺ mit z und R wie oben beschrieben, oder gleiche oder verschiedene organische Reste, ausgewählt aus verzweigten oder unverzweigten, acyclischen oder cyclischen, alicyclischen oder heterocyclischen, aliphatischen oder aromatischen oder heteroaromatischen, substituierten oder unsubstituierten, organischen Resten, oder Resten der Formel (III) 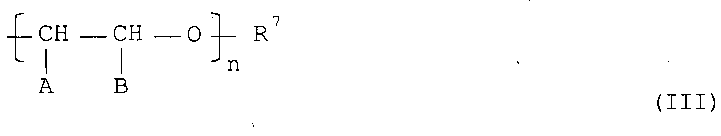 mit
R⁷ = verzweigter oder unverzweigter, acyclischer oder cyclischer, alicyclischer oder heterocyclischer, aliphatischer oder aromatischer oder heteroaromatischer, substituierter oder unsubstituierter organischer Rest,
A oder B gleich Wasserstoff und der jeweilige andere Rest gleich Wasserstoff oder ein substituierter oder unsubstituierter, linearer oder verzweigter Alkylrest mit 1 bis 10, vorzugsweise 1 oder 2 Kohlenstoffatomen, und
n eine zahlengemittelte Zahl von 1 bis 100 ist,
und
b) mindestens eine, zumindest zwei Hydroxyl-Gruppen aufweisende Verbindung mit einem Molekulargewicht von kleiner 250 g/mol enthält,
wobei der Anteil der Komponente a) an der Zusammensetzung von 0,1 bis 70 Gew.-% und der Anteil der Komponente b) von 0,5 bis 90 Gew.-% beträgt.

7. Verfahren nach Anspruch 6, **dadurch gekennzeichnet, dass** als Bindemittel Isocyanate, Polyisocyanate, Harnstoff/Formaldehyd-, Phenol/Formaldeyd-, Melamin/Formaldehyd-, Epoxid- (EP), Polyurethan-, Polyester- und/oder Polylactidharze verwendet werden.

8. Verfahren nach Anspruch 6 oder 7, **dadurch gekennzeichnet, dass** die Trennmittelzusammensetzung auf die Pressform und/oder auf die zu pressende Masse aufgetragen wird.

9. Kompositformkörper, erhältlich nach einem Verfahren gemäß einem der Ansprüche 6 bis 8.

10. Kompositformkörper nach Anspruch 9, **dadurch gekennzeichnet, dass** er die Form einer Platte, eines Blocks, eines Balken oder eines gegebenenfalls profilierten Strangs aufweist.

11. Verwendung eines Kompositformkörpers nach Anspruch 10, zur Herstellung von Möbeln oder Möbelteilen oder von Verpackungsmaterialien oder als Material im Hausbau und Innenausbau.

## Claims

1. Release agent composition, **characterized in that** it contains the components
a) at least one phosphate of the general formula (I) 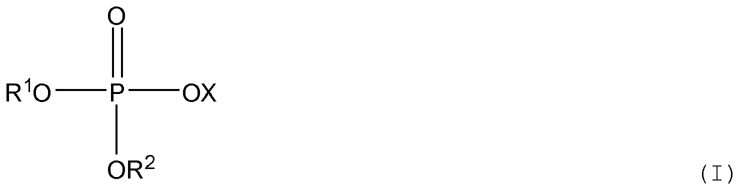 where
X = R⁶, H, metal, NR_{z}H_{4-z}⁺, where z = 0 to 4, and R = hydrocarbon radical having 1 to 10 carbon atoms or a radical of the formula (II) 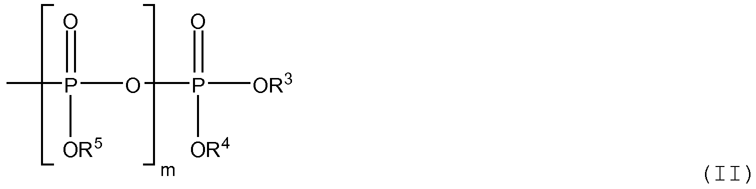 where
m = 0 to 5, and
R¹ to R⁶, independently of one another, are hydrogen, a metal, preferably an alkali metal or alkaline earth metal, such as, for example, sodium or potassium, or NR_{z}H_{4-z}⁺, where z and R are as described above, or **in that** one or all of the radicals R¹ to R⁶ are identical or different organic radicals selected from branched or straight-chain,
acyclic or cyclic, alicyclic or heterocyclic, aliphatic or aromatic or heteroaromatic, substituted or unsubstituted, organic radicals or radicals of the formula (III) 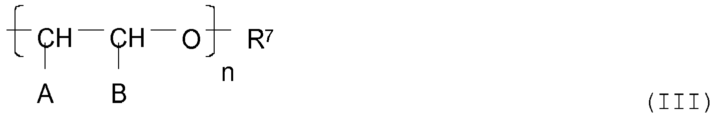 where
R⁷ = a branched or straight-chain, acyclic or cyclic, alicyclic or heterocyclic, aliphatic or aromatic or heteroaromatic, substituted or unsubstituted organic radical,
A or B is hydrogen and the respective other radical is hydrogen or a substituted or unsubstituted, linear or branched alkyl radical having 1 to 10, preferably 1 or 2, carbon atoms and
n is a number-average number from 1 to 100,
and
b) at least one compound having at least two hydroxyl groups and having a molecular weight of less than 250 g/mol, the component b) containing one or more diols, triols and/or polyhydric polyols, and the proportion of the component a), based on the composition, being from 0.1 to 70% by weight and the proportion of the component b) being from 0.5 to 90% by weight,
and the composition having a proportion of water of 80 to 99% by weight,
at least one inorganic phosphate, in which X and R¹ to R⁵ are not organic radicals, and at least one organic phosphate, in which at least one of the radicals X and R¹ to R⁵ is not H, metal or NR_{z}H_{4-z}⁺, where R and z are as defined above, being present as component a), an alkali metal mono- and/or dialkenylphosphate being present as component a).

2. Composition according to Claim 1, **characterized in that** the mass ratio of the component a) to component b) is from 20:80 to 80:20, preferably from 40:60 to 60:40 and particularly preferably about 50:50.

3. Composition according to Claim 1 or 2, **characterized in that** component b) contains at least one compound, preferably exclusively compounds selected from the group consisting of monoethylene glycol, diethylene glycol, triethylene glycol, tetraethylene glycol, propylene glycol, butylene glycol, glycerol, trimethylolpropane, pentaerythritol.

4. Composition according to at least one of Claims 1 to 3, **characterized in that** an alkali metal mono- and/or dioleyl phosphate is present as component a).

5. Composition according to at least one of Claims 1 to 4, **characterized in that** an alkali metal hydroxide, preferably selected from NaOH and KOH, is present as component c).

6. Process for the production of a composite moulding by continuous or batchwise compression moulding of a mass containing at least one organic binder and at least one material which is present in the form of chips, fibres, mats, powders or granules, **characterized in that** the compression moulding is effected in the presence of a release agent composition which contains the components
a) at least one phosphate of the general formula (I) 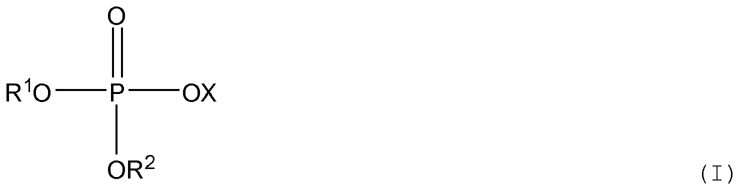 where
X = R⁶, H, metal, NR_{z}H_{4-z}⁺, where z = 0 to 4, and R = hydrocarbon radical having 1 to 10 carbon atoms or a radical of the formula (II) 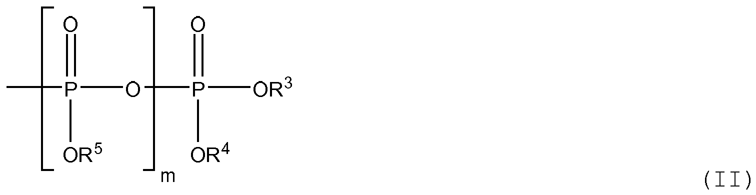 where
m = 0 to 5, and
R¹ to R⁶, independently of one another, are hydrogen, a metal, preferably an alkali metal or alkaline earth metal, such as, for example, sodium or potassium, or NR_{z}H_{4-z}⁺, where z and R are as described above, or identical or different organic radicals selected from branched or straight-chain, acyclic or cyclic, alicyclic or heterocyclic, aliphatic or aromatic or heteroaromatic, substituted or unsubstituted, organic radicals or radicals of the formula (III) 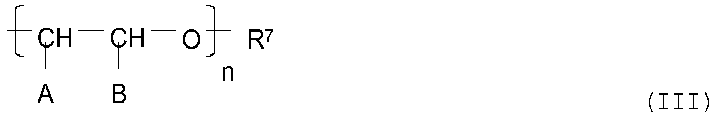 where
R⁷ = a branched or straight-chain, acyclic or cyclic, alicyclic or heterocyclic, aliphatic or aromatic or heteroaromatic, substituted or unsubstituted organic radical,
A or B is hydrogen and the respective other radical is hydrogen or a substituted or unsubstituted, linear or branched alkyl radical having 1 to 10, preferably 1 or 2, carbon atoms and
n is a number-average number from 1 to 100,
and
b) at least one compound having at least two hydroxyl groups and having a molecular weight of less than 250 g/mol,
the proportion of the component a), based on the composition, being from 0.1 to 70% by weight and the proportion of the component b) being from 0.5 to 90% by weight.

7. Process according to Claim 6, **characterized in that** isocyanates, polyisocyanates, urea/formaldehyde, phenol/formaldehyde, melamine/formaldehyde, epoxy (EP), polyurethane, polyester and/or polylactide resins are used as binders.

8. Process according to Claim 6 or 7, **characterized in that** the release agent composition is applied to the compression mould and/or to the mass to be moulded.

9. Composite moulding, obtainable by a process according to any of Claims 6 to 8.

10. Composite moulding according to Claim 9, **characterized in that** it has the shape of a board, a block, a beam or an optionally profiled strand.

11. Use of a composite moulding according to Claim 10 for the production of pieces of furniture or furniture parts or of packaging materials or as material in house building and interior finishing.

## Revendications

1. Composition d'agent de démoulage, **caractérisée en ce qu'**elle contient les composants :
a) au moins un phosphate de formule générale (I) 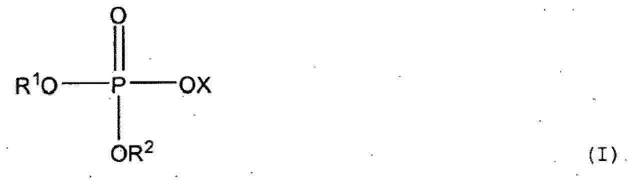 avec
X = R⁶, H, métal, NR_{z}H_{4-z}⁺, avec z = 0 à 4, et R = radical hydrocarboné contenant 1 à 10 atomes de carbone ou radical de formule (II) 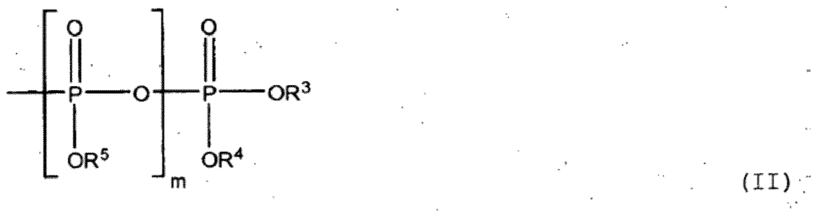 avec
m = 0 à 5, et
R¹ à R⁶ = indépendamment les uns des autres, l'hydrogène, un métal, de préférence un métal alcalin ou alcalino-terreux, tel que par exemple le sodium ou le potassium, ou NR_{z}H_{4-z}⁺ avec z et R tels que décrits précédemment, ou un des ou tous les radicaux R¹ à R⁶ représentent des radicaux organiques identiques ou différents, choisis parmi les radicaux organiques ramifiés ou non ramifiés, acycliques ou cycliques, alicycliques ou hétérocycliques, aliphatiques ou aromatiques ou hétéroaromatiques, substitués ou non substitués, ou les radicaux de formule (III) 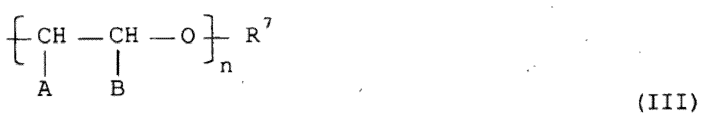 avec
R⁷ = radical organique ramifié ou non ramifié, acyclique ou cyclique, alicyclique ou hétérocyclique, aliphatique ou aromatique ou hétéroaromatique, substitué ou non substitué,
A ou B représentant l'hydrogène et l'autre radical représentant l'hydrogène ou un radical alkyle substitué ou non substitué, linéaire ou ramifié, de 1 à 10, de préférence 1 ou 2 atomes de carbone, et
n représentant un nombre moyen en nombre de 1 à 100,
et
b) au moins un composé comprenant au moins deux groupes hydroxyle, d'un poids moléculaire inférieur à 250 g/mol, le composant b) contenant un ou plusieurs diols, triols et/ou polyols polyvalents, et la proportion du composant a) dans la composition étant de 0,1 à 70 % en poids et la proportion du composant b) étant de 0,5 à 90 % en poids,
et la composition présentant une proportion d'eau de 80 à 99 % en poids,
au moins un phosphate inorganique dans lequel X et R¹ à R⁵ ne sont pas des radicaux organiques et au moins un phosphate organique dans lequel au moins un des radicaux X et R¹ à R⁵ ne représente pas H, un métal ou NR_{z}H_{4-z}⁺, avec R et z tels que définis précédemment, étant contenus en tant que composant a), un phosphate de mono- et/ou dialcényle alcalin étant contenu en tant que composant a).

2. Composition selon la revendication 1, **caractérisée en ce que** le rapport massique du composant a) par rapport au composant b) est de 20 sur 80 à 80 sur 20, de préférence de 40 sur 60 à 60 sur 40 et de manière particulièrement préférée d'environ 50 sur 50.

3. Composition selon la revendication 1 ou 2, **caractérisée en ce que** le composant b) contient au moins un composé, de préférence exclusivement des composés, choisi dans le groupe comprenant le monoéthylène glycol, le diéthylène glycol, le triéthylène glycol, le tétraéthylène glycol, le propylène glycol, le butylène glycol, la glycérine, le triméthylolpropane, la pentaérythrite.

4. Composition selon au moins l'une quelconque des revendications 1 à 3, **caractérisée en ce qu'**un phosphate de mono- et/ou di-oléyle alcalin est contenu en tant que composant a).

5. Composition selon au moins l'une quelconque des revendications 1 à 4, **caractérisée en ce qu'**un hydroxyde alcalin, de préférence choisi parmi NaOH et KOH est contenu en tant que composant c).

6. Procédé de fabrication d'un corps moulé composite par compression continue ou discontinue d'une masse contenant au moins un liant organique et au moins un matériau qui se présente sous la forme de copeaux, de fibres, de mats, de poudres ou de granulats, **caractérisé en ce que** la compression a lieu en présence d'une composition d'agent de démoulage, qui contient les composants :
a) au moins un phosphate de formule générale (I) 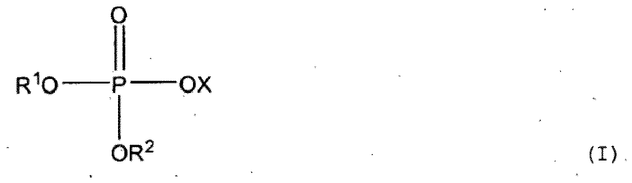 avec
X = R⁶, H, métal, NR_{z}H_{4-z}⁺, avec z = 0 à 4, et R = radical hydrocarboné contenant 1 à 10 atomes de carbone ou radical de formule (II) 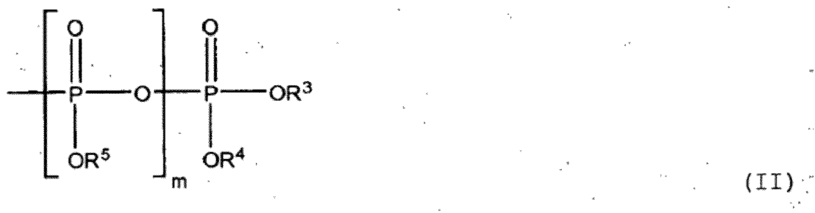 avec
m = 0 à 5, et
R¹ à R⁶ = indépendamment les uns des autres, l'hydrogène, un métal, de préférence un métal alcalin ou alcalino-terreux, tel que par exemple le sodium ou le potassium, ou NR_{z}H_{4-z}⁺ avec z et R tels que décrits précédemment, ou des radicaux organiques identiques ou différents, choisis parmi les radicaux organiques ramifiés ou non ramifiés, acycliques ou cycliques, alicycliques ou hétérocycliques, aliphatiques ou aromatiques ou hétéroaromatiques, substitués ou non substitués, ou les radicaux de formule (III) 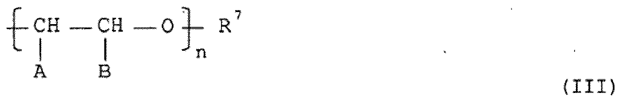 avec
R⁷ = radical organique ramifié ou non ramifié, acyclique ou cyclique, alicyclique ou hétérocyclique, aliphatique ou aromatique ou hétéroaromatique, substitué ou non substitué,
A ou B représentant l'hydrogène et l'autre radical représentant l'hydrogène ou un radical alkyle substitué ou non substitué, linéaire ou ramifié, de 1 à 10, de préférence 1 ou 2 atomes de carbone, et
n représentant un nombre moyen en nombre de 1 à 100,
et
b) au moins un composé comprenant au moins deux groupes hydroxyle, d'un poids moléculaire inférieur à 250 g/mol,
la proportion du composant a) dans la composition étant de 0,1 à 70 % en poids et la proportion du composant b) étant de 0,5 à 90 % en poids.

7. Procédé selon la revendication 6, **caractérisé en ce que** des isocyanates, des polyisocyanates, des résines d'urée/formaldéhyde, de phénol/formaldéhyde, de mélamine/formaldéhyde, d'époxyde (EP), de polyuréthane, de polyester et/ou de polylactide sont utilisés en tant que liant.

8. Procédé selon la revendication 6 ou 7, **caractérisé en ce que** la composition d'agent de démoulage est appliquée sur le moule de compression et/ou sur la masse à comprimer.

9. Corps moulé composite, pouvant être obtenu par un procédé selon l'une quelconque des revendications 6 à 8.

10. Corps moulé composite selon la revendication 9, **caractérisé en ce qu'**il présente la forme d'une plaque, d'un bloc, d'une barre ou d'un boudin éventuellement profilé.

11. Utilisation d'un corps moulé composite selon la revendication 10, pour la fabrication de meubles ou de parties de meubles ou de matériaux d'emballage ou en tant que matériau dans la construction et la construction d'intérieur.
